# EUROPÄISCHE PATENTSCHRIFT

(11) **EP 1 105 895 B1**
(45) Veröffentlichungstag und Bekanntmachung des Hinweises auf die Patenterteilung: **10.04.2002**
(21) Anmeldenummer: 99952353.3
(22) Anmeldetag: 12.08.1999
(51) Int. Cl.: H01H 7/02, H02P 3/06

(54) **ELEKTRISCHER SCHALTER**
ELECTRIC SWITCH
COMMUTATEUR ELECTRIQUE

(30) Priorität: 22.08.1998 DE 19838268
(43) Veröffentlichungstag der Anmeldung: 13.06.2001
(73) Patentinhaber: Marquardt GmbH, 78604 Rietheim-Weilheim (DE)
(72) Erfinder: SCHÄFFELER, Alois, D-78549 Spaichingen (DE); RIESS, Axel, D-78532 Tuttlingen (DE)
(74) Vertreter: Patentanwälte Eisele, Otten & Roth
(86) Internationale Anmeldenummer: DE9902498
(87) Internationale Veröffentlichungsnummer: WO0011691

(56) Entgegenhaltungen:
- US-A- 3 970 807
- US-A- 5 644 112

## Beschreibung

Die Erfindung betrifft einen Schalter nach dem Oberbegriff des Patentanspruchs 1.

Elektrohandwerkzeuge, wie Bohrmaschinen, Winkelschleifer, Kreissägen, Oberfräsen, Heckenscheren o. dgl., können elektrisch bremsbar ausgebildet sein. Für diesen Zweck ist der elektrische Schalter am Elektrohandwerkzeug so ausgestaltet, daß der Elektromotor des Elektrohandwerkzeugs beim Ausschalten in einen Kurzschlußbetrieb umgeschaltet wird.

Ein derartiger Schalter für einen wenigstens eine Feldwicklung und einen Anker besitzenden Elektromotor, ist aus der DE 42 32 402 A1 bzw. US-A-5 644 112 bekannt. Der Schalter besitzt zwei Schaltkontakte S1 und S2, die zwischen einem Motor- und einem Bremsbetrieb des Elektromotors umschalten. Im Motorbetrieb ist ein aus der Feldwicklung, dem Schaltkontakt S1, S2 und dem Anker in Reihe an der Versorgungsspannung liegender Motorstromkreis gebildet, während im Bremsbetrieb ein aus der Feldwicklung, dem Schaltkontakt S1, S2 und dem Anker bestehender geschlossener Bremsstromkreis gebildet ist. Um eine Zerstörung des Schalters beim Auftreten eines Lichtbogens beim Umschalten vom Motor- in den Bremsbetrieb zu verhindern, ist mit einem der Schaltkontakte ein Verzögerungsmittel zur Verzögerung der Umschaltbewegung vom Motor- in den Bremsbetrieb mit einer Verzögerungszeit in Wirkverbindung bringbar.

Es hat sich herausgestellt, daß es trotz dieser Maßnahme Anwendungsfälle gibt, wo eine vorzeitige Zerstörung des Schalters durch Kontaktverschweißung aufgrund einer Lichtbogenbildung nicht ausgeschlossen werden kann.

Weiter ist aus der US-A-3 970 807 ein elektrischer Schalter mit einem Kontaktsystem bekannt, das aus einem Schaltkontakt und einem Festkontakt besteht, wobei die Schaltbewegung des Schaltkontakts von einem Verzögerungsmittel verzögert wird. Der Schalter kann in mehrpoliger Ausgestaltung mehrere Schaltkontakte mit jeweils einer unterschiedlichen Zeitverzögerung aufweisen, wozu dem jeweiligen Schaltkontakt ein Verzögerungsmittel zugeordnet ist. Dieser Schalter ist aufgrund der Verzögerungsmittel von erhöhter Größe und zum Einsatz in einem elektrisch bremsbaren Elektrohandwerkzeug nicht geeignet.

Der Erfindung liegt ausgehend von der DE 42 32 402 A1 die Aufgabe zugrunde, den Schalter derart weiterzuentwickeln, daß auch in diesen besonderen Anwendungsfällen eine vorzeitige Zerstörung des Schalters mit Sicherheit verhindert ist.

Diese Aufgabe wird bei einem gattungsgemäßen Schalter durch die kenn zeichnenden Merkmale des Anspruchs 1 gelöst.

Beim erfindungsgemäßen Schalter ist das eine Verzögerungsmittel mit einem der weiteren Schaltkontakte in Wirkverbindung bringbar, so daß die Umschaltbewegung vom Brems- in den Motorbetrieb und/oder vom Motor- in den Bremsbetrieb des weiteren Schaltkontakts mit einer weiteren Verzögerungszeit ebenfalls verzögert ist. Das eine Verzögerungsmittel und/oder die Wirkverbindung ist dabei derart ausgestaltet, daß die Verzögerungszeiten für die beiden Schaltkontakte unterschiedlich sind. Weitere Ausgestaltungen der Erfindung sind Gegenstand der Unteransprüche.

Es kann die Umschaltbewegung der Schaltkontakte S1, S2 sowohl vom Motor- in den Bremsbetrieb als auch umgekehrt vom Bremsin den Motorbetrieb verzögert sein. Insbesondere kann der im Motorstromkreis zwischen dem Anker und der Feldwicklung befindliche Schaltkontakt S1 mit einer ersten Einschaltverzögerungszeit t1ein vom Brems- in den Motorbetrieb und mit einer ersten Ausschaltverzögerungszeit t1aus vom Motor- in den Bremsbetrieb umschalten. Zusätzlich oder auch alternativ kann der im Motorstromkreis zwischen dem Anker und der Versorgungsspannung befindliche Schaltkontakt S2 mit einer zweiten Einschaltverzögerungszeit t2ein vom Brems- in den Motorbetrieb und mit einer zweiten Ausschaltverzögerungszeit t2aus vom Motor- in den Bremsbetrieb umschalten.

Ist zusätzlich die Festlegung der Schaltreihenfolge der Schaltkontakte notwendig, so kann die zweite Einschaltverzögerungszeit t2ein größer als die erste Einschaltverzögerungszeit t1ein und/oder die zweite Ausschaltverzögerungszeit t2aus größer als die erste Ausschaltverzögerungszeit t1aus gewählt werden. Dadurch ist die Differenz t3ein zwischen der zweiten und ersten Einschaltverzögerungszeit und/oder die Differenz t3aus zwischen der zweiten und ersten Ausschaltverzögerungszeit von Null verschieden.

Handelt es sich um einen mittels Wechselspannung gespeisten Elektromotor, so werden zweckmäßigerweise die Verzögerungszeiten t1ein, t2ein, t1aus, t2aus so gewählt, daß diese wenigstens die Größe der Zeitdauer einer Wechselspannungshalbewelle aufweisen. Üblicherweise werden diese Verzögerungszeiten daher größer als 10 Millisekunden sein.

In einer weiteren Ausgestaltung der Erfindung kann der im Bremsstromkreis befindliche Schaltkontakt S1 mit einer ersten Einschaltverzögerungszeit t1ein vom Motor- in den Bremsbetrieb sowie im wesentlichen unverzögert vom Brems- in den Motorbetrieb umschalten. Zusätzlich oder alternativ schaltet der im Motorstromkreis befindliche Schaltkontakt S3 mit einer dritten Einschaltverzögerungszeit t3ein vom Bremsin den Motorbetrieb um, während der weitere im Motorstromkreis befindliche Schalter S2 im wesentlichen unverzögert vom Brems- in den Motorbetrieb umschaltet. Weiterhin schalten die beiden im Motorstromkreis befindlichen Schaltkontakte S2, S3 im wesentlichen unverzögert vom Motorin den Bremsbetrieb um. Die Schaltkontakte S2, S3 können dann für die Schaltung eines Sanftanlaufs des Elektromotors verwendet werden. Es bietet sich in diesem Fall an, die erste Einschaltverzögerungszeit t1ein größer als 4 Millisekunden und/oder die dritte Einschaltverzögerungszeit t3ein im Bereich von ungefähr 600 Millisekunden zu wählen.

Zur näheren konstruktiven Ausgestaltung des Schalters sind die Schaltkontakte S1, S2, S3 in einem Gehäuse aufgenommen und am Gehäuse ist ein Betätigungsorgan zur manuellen Umschaltung der Schaltkontakte S1, S2, S3 angeordnet. Die Schaltkontakte S1, S2, S3 sind mit einem Schnappmechanismus in der Art eines Übertotpunktschalters versehen, so daß die Umschaltbewegung nach Auslösung durch das Betätigungsorgan vom Betätigungsorgan nicht weiter beeinflußbar ist.

In einer bevorzugter Weiterbildung der Erfindung bestehen die Mittel zur Herstellung der Wirkvarbindung des Schaltkontaktes S1, S2 mit dem Verzögerungsmittel aus einem Gestänge, das einerseits am Schaltkontakt S1, S2 und andererseits am Verzögerungsmittel angelenkt und/oder befestigt ist. Das Gestänge besteht wiederum aus einem ersten Am und einem zweiten Arm, die mittels eines in eine in der Art eines Langloches ausgebildete Aufnahmepfanne eingreifenden Kugelkopfes miteinander gelenkig verbunden sind. Der erste Arm ist am Schaltkontakt S1, S2 angelenkt und der zweite Arm am Verzögerungsmittel befestigt.

Das Verzögerungsmittel befindet sich zweckmäßigerweise im Gehäuse des Schalters und kann als eine mit einer viskosen Flüssigkeit gefüllte Trommel mit einer darin angeordneten Welle ausgebildet sein, so daß die Trommel und die Welle gedämpft relativ zueinander bewegbar sind. Die Viskosität der Flüssigkeit ist in Abhängigkeit von der gewünschten Verzögerungszeit gewählt. Der zweite Arm des Gestänges ist an der Welle befestigt, so daß der zweite Arm mit der Welle verzögert bewegbar ist.

Die verzögert umschaltbaren Schaltkontakte S1, S2, S3 stehen mit lediglich einem Verzögerungsmittel in Wirkverbindung. Dabei ist der jeweilige zweite Arm des Gestänges für die Schaltkontakte S1, S2 an jeweils einem Ende der Welle befestigt. Die Aufnahmepfannen zwischen dem ersten und zweiten Arm des Gestänges besitzen eine unterschiedlich Größe zur Einstellung eines unterschiedlichen Leerhubs für die Schaltkontakte S1, S2, so daß mittels des Leerhubes die unterschiedliche Verzögerungszeit der Schaltkontakte S1, S2 und damit die Differenz t3ein, t3aus zwischen den jeweiligen Verzögerungszeiten einstellbar ist.

Die mit der Erfindung erzielten Vorteile bestehen insbesondere darin, daß auch bei schwierigen Anwendungsfällen eine Zerstörung des Schalters aufgrund einer Lichtbogenbildung wirksam verhindert ist. Dadurch erhält man eine Qualitätssteigerung sowie eine verbesserte Lebensdauer des Schalters. Weiterhin ist vorteilhaft, daß Ausfällen der elektrischen Bremsung wirksam vorgebeugt ist. Dies steigert wiederum die Sicherheit für den Benutzer des Elektrohandwerkzeugs. Schließlich werden komplizierte Schaltvorgänge, wie sie gerade bei elektrisch bremsbaren Elektromotoren notwendig sind, durch konstruktiv einfache Ausgestaltungen gelöst. Dadurch läßt sich der elektrische Schalter einfacher herstellen und montieren, woraus auch eine beträchtliche Kosteneinsparung für den erfindungsgemäßen Schalter resultiert.

Ausführungsbeispiele der Erfindung sind in den Zeichnungen dargestellt und werden im folgenden näher beschrieben. Es zeigen
- Fig. 1: ein prinzipielles Schaltbild für ein elektrisch bremsbares Elektrohandwerkzeug,
- Fig. 2: einen Längsschnitt durch einen elektrischen Schalter für das elektrisch bremsbare Elektrohandwerkzeug,
- Fig. 3: einen Schnitt entlang der Linie 3-3 aus Fig. 2,
- Fig. 4: einen Schnitt entlang der Linie 4-4 aus Fig. 2,
- Fig. 5: ein Zeitdiagramm für den Umschaltvorgang des Schalters in der Schaltung nach Fig. 1 und
- Fig. 6: ein prinzipielles Schaltbild für einen elektrisch bremsbaren Elektromotor entsprechend einem weiteren Ausführungbeispiel.

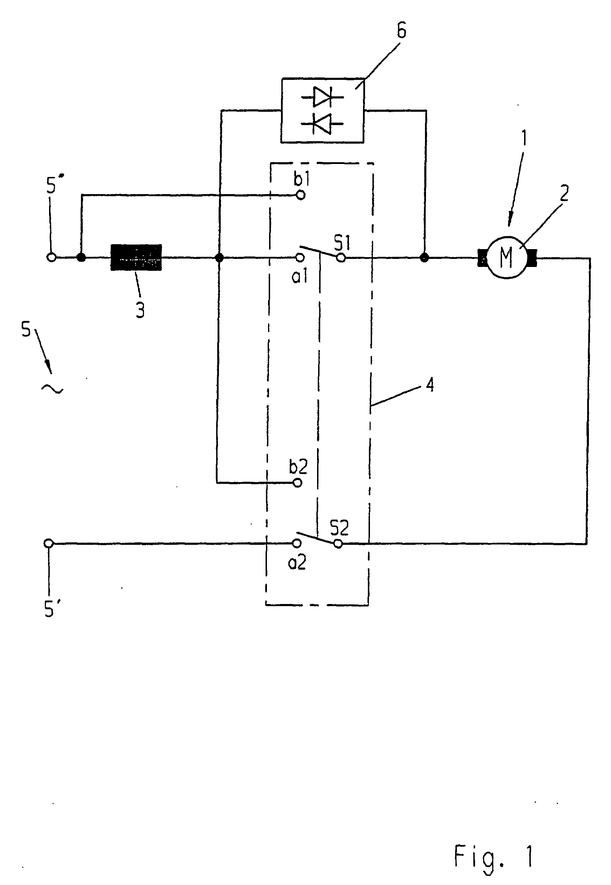

Ein prinzipielles Schaltbild für die elektrische Schaltung eines elektrisch bremsbares Elektrohandwerkzeuges, wie einer Bohrmaschine, eines Winkelschleifers, einer Kreissäge, einer Oberfräse, einer Heckenschere o. dgl., ist näher in Fig. 1 zu sehen.

Das Elektrohandwerkzeug besitzt einen Elektromotor 1 mit einem Anker 2 und wenigstens einer Feldwicklung 3. Der Elektromotor 1 ist mittels elektrischer Anschlüsse 5', 5'' mit der Versorgungsspannung 5, beispielsweise mit der Netzwechselspannung verbindbar. Mittels eines Schalters 4 kann der Elektromotor 1 zwischen dem Motor- und dem Bremsbetrieb umgeschaltet werden.

Der Schalter 4 besitzt Schaltkontakte und zwar vorliegend zwei Schaltkontakte S1 und S2, wobei der Schaltkontakt S1 zwischen dem Anker 2 und der Feldwicklung 3 und der Schaltkontakt S2 zwischen dem Anker 2 und dem elektrischen Anschluß 5' angeordnet ist. Der Schaltkontakt S1 schaltet zwischen zwei Festkontakten a1, b1 und der Schaltkontakt S2 zwischen zwei Festkontakten a2, b2 um. Der Festkontakt a1 stellt die Verbindung zur einen Seite der Feldwicklung 3 her, während der Festkontakt b1 die Verbindung zur anderen Seite der Feldwicklung 3 herstellt. Der Festkontakt a2 stellt eine Verbindung zum elektrischen Anschluß 5' her, während der Festkontakt b2 einerseits eine Verbindung zu der einen Seite der Feldwicklung 3 und andererseits eine Verbindung zu einem Bremsmodul 6 bietet. Das Bremsmodul 6 ist weiter mit dem Anker 2 verbunden.

Im Motorbetrieb, der in Fig. 1 zu sehen ist, liegen die Schaltkontakte S1 und S2 jeweils an den Festkontakten a1 und a2 an. Dadurch ist ein aus der Feldwicklung 3, den beiden Schaltkontakten S1, S2 und dem Anker 2 in Reihe an den elektrischen Anschlüssen 5', 5'' der Versorgungsspannung 5 liegender Motorstromkreis gebildet. Im Bremsbetrieb liegen die Schaltkontakte S1 und S2 an den Festkontakten b1 und b2 an, so daß ein aus der Feldwicklung 3, den beiden Schaltkontakten S1, S2 und dem Anker 2 bestehender, geschlossener Bremsstromkreis gebildet ist. In einem weiteren Zweig des Bremsstromkreises liegt das Bremsmodul 6, an dem die aufgrund der Generatorwirkung des kurzgeschlossenen Elektromotors 1 erzeugte elektrische Energie in Wärme umgewandelt wird. Durch entsprechende Dimensionierung des Bremsmoduls 6, das beispielsweise aus einer Anordnung von Dioden bestehen kann, läßt sich die Abbremszeit des Elektromotors 1 einstellen.

Mit dem einen Schaltkontakt S1 ist ein Verzögerungsmittel in Wirkverbindung bringbar, so daß eine Verzögerung der Umschaltbewegung vom Motor- in den Bremsbetrieb mit einer bestimmten Verzögerungszeit erfolgt. Im ersten Ausführungsbeispiel für die Erfindung entsprechend der Fig. 1 ist mit dem weiteren Schaltkontakt S2 ebenfalls ein Verzögerungsmittel für die Verzögerung der Umschaltbewegung mit einer weiteren Verzögerungszeit in Wirkverbindung bringbar. Das Verzögerungsmittel und/oder die Wirkverbindung für die Schaltkontakte S1, S2 ist nun derart ausgestaltet, daß die Verzögerungszeiten für die beiden Schaltkontakte S1, S2 unterschiedlich sind. Zusätzlich ist noch die Umschaltbewegung beider Schaltkontakte S1, S2 sowohl vom Motor- in den Bremsbetrieb als auch umgekehrt vom Brems- in den Motorbetrieb verzögert. Aufgrund dieser Maßnahmen sind schädliche Auswirkungen einer eventuellen Lichtbogenbildung zwischen den Schaltkontakten S1, S2 und den Festkontakten a1, b1, a2, b2 beim Umschalten der Schaltkontakte S1, S2 wirksam verhindert, da der Lichtbogen bei Beendigung des Umschaltvorgangs bereits erloschen oder zumindest erheblich gedämpft ist.

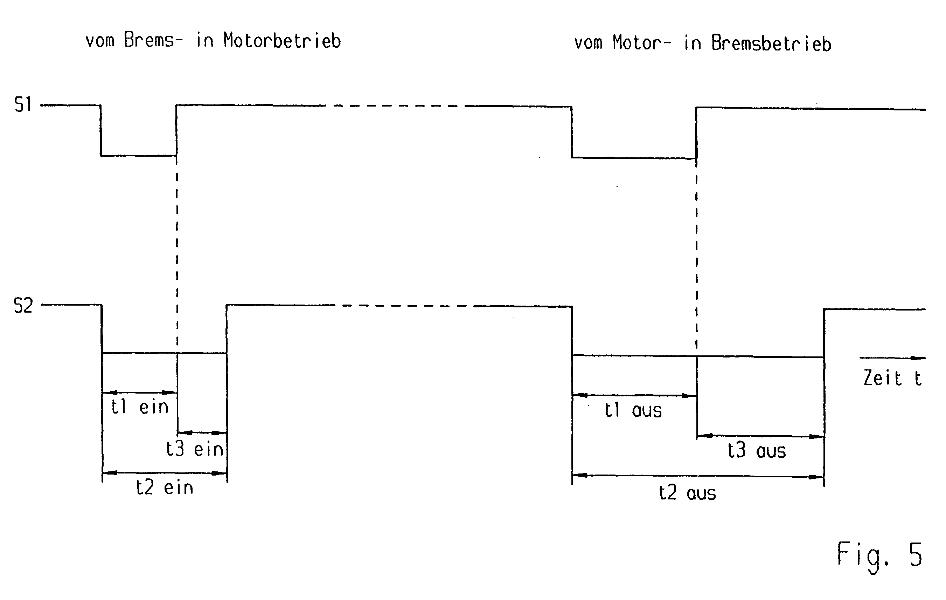

Der im Motorstromkreis zwischen dem Anker 2 und der Feldwicklung 3 befindliche Schaltkontakt S1 schaltet mit einer ersten Einschaltverzögerungszeit t1ein vom Brems- in den Motorbetrieb und mit einer ersten Ausschaltverzögerungszeit t1aus vom Motor- in den Bremsbetrieb um. Der im Motorstromkreis zwischen dem Anker 2 und dem Anschluß 5' der Versorgungsspannung 5 befindliche Schaltkontakt S2 schaltet mit einer zweiten Einschaltverzögerungszeit t2ein vom Brems- in den Motorbetrieb und mit einer zweiten Ausschaltverzögerungszeit t2aus vom Motor- in den Bremsbetrieb um. Ein entsprechendes Zeitdiagramm ist in Fig. 5 gezeigt, wobei die jeweils links verlaufende Vertikale den Beginn der Umschaltbewegung und die rechts verlaufende Vertikale das Ende der Umschaltbewegung des Schaltkontakts S1, S2 bedeuten. Der Abstand der linken und rechten Vertikalen entspricht dann der jeweiligen Verzögerungszeit. Wie bereits erwähnt, sind die Verzögerungszeiten t1ein und/oder t1aus sowie t2ein und/oder t2aus der Umschaltbewegung für die beiden Schaltkontakte S1 sowie S2 unterschiedlich gewählt.

Insbesondere kann es vorteilhaft sein, wenn die zweite Einschaltverzögerungszeit t2ein größer als die erste Einschaltverzögerungszeit t1ein und/oder die zweite Ausschaltverzögerungszeit t2aus größer als die erste Ausschaltverzögerungszeit t1aus ist, wie ebenfalls aus Fig. 5 näher hervorgeht. Somit ist dann die Differenz t3ein zwischen der zweiten und ersten Einschaltverzögerungszeit t2ein, t1ein und/oder die Differenz t3aus zwischen der zweiten und ersten Ausschaltverzögerungszeit t2aus, t1aus von Null verschieden.

Wird der Elektromotor 1 mit der üblichen Netzspannung betrieben, so ist es vorteilhaft, wenn die Verzögerungszeiten wenigstens die Größe der Zeitdauer einer Wechselspannungshalbwelle aufweisen, also insbesondere größer als 10 Millisekunden sind. Beispielsweise kann die erste und zweite Einschaltverzögerungszeit t1ein, t2ein zwischen 10 Millisekunden und 100 Millisekunden liegen. Dabei ist die zweite Einschaltverzögerungszeit t2ein größer als die erste Einschaltverzögerungszeit t1ein, womit die Differenz t3ein zwischen den beiden Einschaltverzögerungszeiten t1ein, t2ein größer als 0 Millisekunden ist. Weiter kann die erste und zweite Ausschaltverzögerungszeit t1aus, t2aus zwischen 10 Millisekunden und 150 Millisekunden liegen, wobei die zweite Ausschaltverzögerungszeit t2aus größer als die erste Ausschaltverzögerungszeit t1aus ist, womit die Differenz t3aus zwischen den beiden Ausschaltverzögerungszeiten t1aus, t2aus ebenfalls größer als 0 Millisekunden ist.

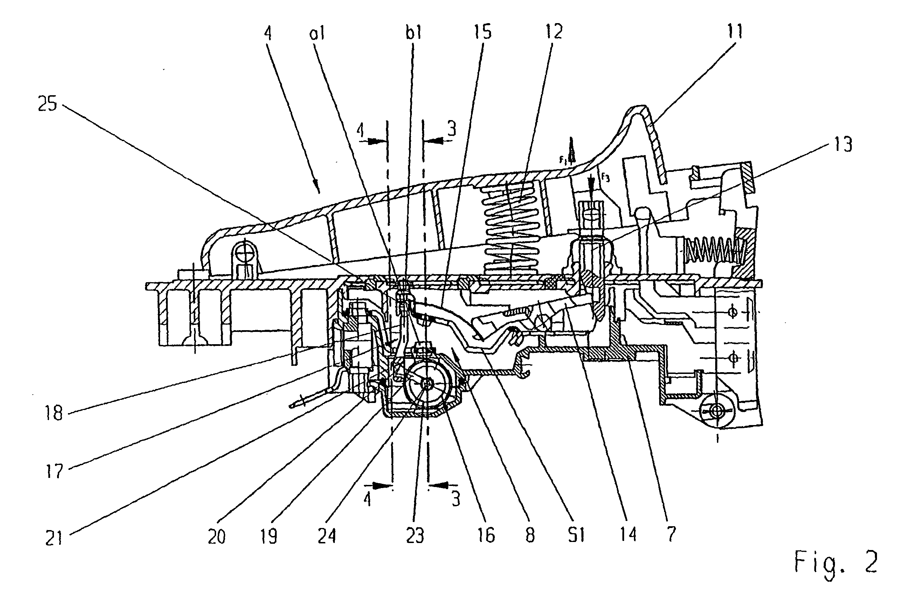

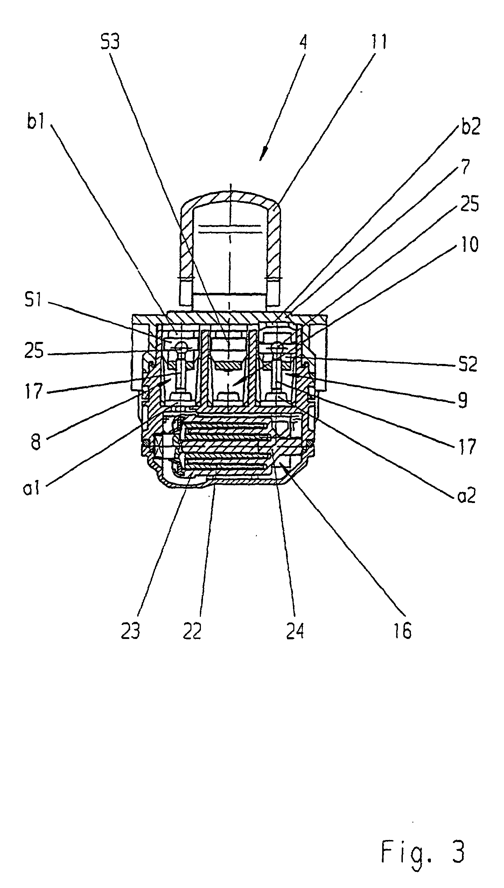

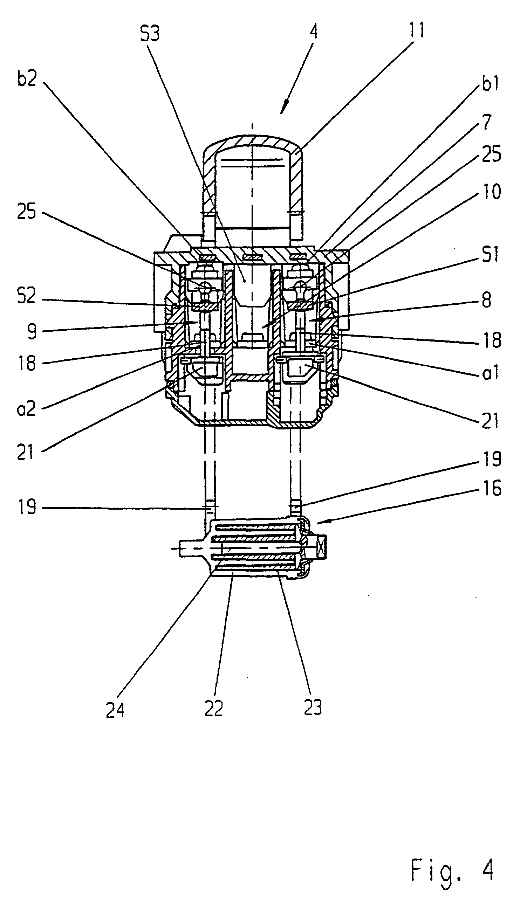

Die nähere Ausgestaltung des elektrischen Schalters 4 ist im Längsschnitt in Fig. 2 und in zwei Querschnitten in Fig. 3 sowie 4 zu sehen.

Der Schalter 4 besitzt ein Gehäuse 7 zur Aufnahme von drei Kontaktsystemen 8, 9, 10, die in Fig. 3 und 4 gezeigt sind.

Das Kontaktsystem 8 umfaßt den Schaltkontakt S1 sowie die Festkontakte a1, b1, während das Kontaktsystem 9 den Schaltkontakt S2 sowie die Festkontakte a2, b2 enthält. Das weitere Kontaktsystem 10 mit dem Schaltkontakt S3 dient beispielsweise der Begrenzung des Anlaufstroms des Elektromotors 1. Am Gehäuse 7 ist ein Betätigungsorgan 11 angeordnet, das manuell gegen die Kraft einer in Fig. 2 sichtbaren Feder 12 bewegbar ist. Die Bewegung des Betätigungsorgans 11 wirkt auf die Kontaktsysteme 8, 9, 10 zur Umschaltung der Schaltkontakte S1, S2, S3 ein.

Die Schaltkontakte S1, S2, S3 sind mit einem Schnappmechanismus versehen, der nachfolgend anhand der Fig. 2 näher erläutert wird. Am Betätigungsorgan 11 ist ein Stößel 13 angelenkt, der in das Gehäuse 7 hineinführt. Mit dem Stößel 13 steht der eine Hebelarm einer im Inneren des Gehäuses 7 befindlichen Wippe 14 in Wirkverbindung. Zwischen dem anderen Hebelarm der Wippe 14 und dem Schaltkontakt S1, S2, S3 ist eine Blattfeder 15 eingespannt. Wird das Betätigungsorgan 11 betätigt, so überträgt der Stößel 13 diese Bewegung auf die Wippe 14, die dadurch die Blattfeder 15 spannt bis der Schaltkontakt S1, S2, S3 am Umschaltpunkt schnappend umschaltet. Der beschriebene Schnappmechanismus wirkt somit in der Art eines Übertotpunktschalters auf die Kontaktsysteme 8, 9, 10, so daß die Umschaltbewegung der Schaltkontakte S1, S2, S3 nach Auslösung durch das Betätigungsorgan 11 vom Betätigungsorgan 11 nicht mehr weiter beeinflußbar ist.

Wie weiter aus Fig. 2 zu entnehmen ist, ist den Schaltkontakten S1, S2 ein Verzögerungsmittel 16 zugeordnet, mit dem der Schaltkontakt S1, S2 erfindungsgemäß in Wirkverbindung steht oder beim Umschalten in Wirkverbindung bringbar ist. Die Mittel zur Herstellung der Wirkverbindung bestehen aus einem Gestänge 17, das einerseits am Schaltkontakt S1, S2 angelenkt und andererseits am Verzögerungsmittel 16 befestigt ist. Selbstverständlich können Anlenkung und Befestigung auch umgekehrt sein oder auch je beidseitig sein. Das Gestänge 17 besteht wiederum aus einem ersten Arm 18 und einem zweiten Arm 19. Zur gelenkigen Verbindung der beiden Arme 18, 19 dient ein Kugelkopf 20 am zweiten Arm 19, der in eine Aufnahmepfanne 21 am ersten Arm 18 eingreift. Die Aufnahmepfanne 21 ist in der Art eines Langloches ausgebildet, wie insbesondere der Fig. 4 zu entnehmen ist. Selbstverständlich können auch der Kugelkopf 20 und die Aufnahmepfanne 21 an den beiden Armen 18, 19 vertauscht angeordnet sein. An dem der Aufnahmepfanne 21 gegenüberliegenden Ende ist der erste Arm 18 mittels eines Kugelgelenks 25 am Schaltkontakt S1, S2 angelenkt. Das dem Kugelkopf 20 gegenüberliegende Ende des zweiten Arms 19 ist am Verzögerungsmittel 16 befestigt.

Das im Gehäuse 7 des Schalters 4 befindliche Verzögerungsmittel 16 ist im Schnitt in Fig. 3 gezeigt. Das Verzögerungsmittel 16 ist als eine mit einer viskosen Flüssigkeit 22 gefüllte Trommel 23 mit einer darin angeordneten Welle 24 ausgebildet. Die Trommel 23 und die Welle 24 sind dadurch gedämpft relativ zueinander bewegbar. Der zweite Arm 19 ist mit seinem dem Kugelkopf 20 gegenüberliegendem Ende an der Welle 24 befestigt, was anhand der Fig. 2 ersichtlich ist. Damit ist der zweite Arm 19 mit der Welle 24 verzögert bewegbar. Wird das Betätigungsorgan 11 betätigt, so wirkt bei Überschreiten des Umschaltpunktes die Verzögerung des Verzögerungsmittels 16 über das Gestänge 17 auf den Schaltkontakt S1, S2 ein, so daß sich der Schaltkontakt S1, S2 verzögert zwischen den beiden Festkontakten a1, b1 bzw. a2, b2 bewegt. Die Viskosität der Flüssigkeit 22 wird in Abhängigkeit von der gewünschten Verzögerungszeit gewählt.

Wie aus Fig. 4 näher hervorgeht, stehen die beiden verzögert umschaltbaren Schaltkontakte S1, S2 mit lediglich einem Verzögerungsmittel 16 in Wirkverbindung. Der jeweilige zweite Arm 19 des Gestänges 17 für die beiden Schaltkontakte S1, S2 ist dabei an jeweils einem Ende der Welle 24 befestigt. Um dennoch unterschiedliche Verzögerungszeiten für die beiden Schaltkontakte S1, S2 einzustellen, besitzen die Aufnahmepfannen 21 für die Kopplung zwischen dem ersten und zweiten Arm 18, 19 des Gestänges 17 eine unterschiedlich Größe. Die Größe der Aufnahmepfanne 21 stellt den Leerhub für den Kugelkopf 20 und damit für den ersten Arm 18 am jeweiligen Schaltkontakt S1, S2 ein. Mittels der Größe des Leerhubes kann die unterschiedliche Verzögerungszeit der beiden Schaltkontakte S1, S2, also die Differenz t3ein, t3aus zwischen den jeweiligen Verzögerungszeiten beim Umschalten der Schaltkontakte S1, S2, eingestellt werden.

Alternativ können auch die verzögert umschaltbaren Schaltkontakte S1, S2 mit jeweils einem eigenen Verzögerungsmittel 16 in Wirkverbindung stehen, was jedoch nicht weiter gezeigt ist. Die einzelnen Verzögerungsmittel 16 sind dann entsprechend der jeweils zugeordneten Verzögerungszeit eingestellt. Aufgrund der Platzeinsparung ist jedoch die Verwendung lediglich eines einzigen Verzögerungsmittels 16 bevorzugt.

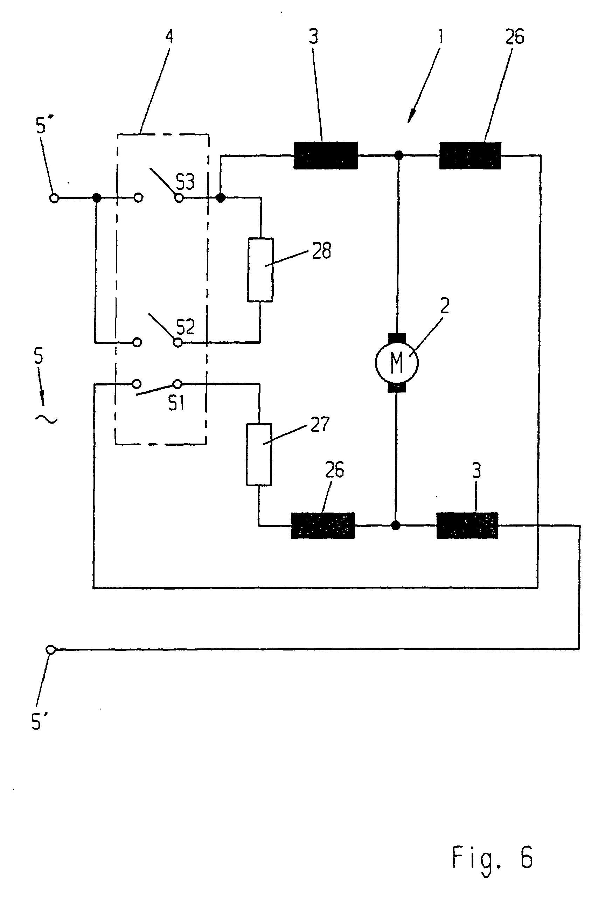

Das Prinzipschaltbild für einen elektrisch bremsbaren Elektromotor 1 entsprechend dem zweiten Ausführungsbeispiel ist näher in Fig. 6 gezeigt. Der Elektromotor 1 besitzt einen Anker 2 sowie zwei Feldwicklungen 3 und ist über einen elektrischen Schalter 4 mit den elektrischen Anschlüssen 5', 5'' der Versorgungsspannung 5 verbunden. Zusätzlich weist der Elektromotor 1 noch zwei Bremswicklungen 26 auf. Der Schalter 4 umfaßt drei Schaltkontakte S1, S2, S3.

In dem in Fig. 6 dargestellten Bremsbetrieb ist der Schaltkontakt S1 eingeschaltet, während die Schaltkontakte S2, S3 ausgeschaltet sind. Der Bremsstromkreis umfaßt damit den Anker 2, die Bremswicklungen 26, den eingeschalteten Schaltkontakt S1 und einen Bremswiderstand 27, an dem die im kurzgeschlossenen Elektromotor 1 erzeugte elektrische Energie in Wärme umgewandelt wird. Im nicht weiter dargestellten Motorbetrieb ist der Schaltkontakt S2 und/oder S3 eingeschaltet, während der Schaltkontakt S1 ausgeschaltet ist. Der Motorstromkreis verläuft damit vom elektrischen Anschluß 5'' über die Schaltkontakte S2 und/oder S3 zu den Feldwicklungen 3 sowie den Anker 2 und schließlich zum elektrischen Anschluß 5'. Je nach Schaltstellung der Schaltkontakte S2, S3 befindet sich im Motorstromkreis noch ein überbrückbarer Sanftanlaufwiderstand 28, der den Sanftanlauf des Elektromotors 1 beim Umschalten in den Motorbetrieb bewirkt.

Beim zweiten Ausführungsbeispiel schaltet nun der im Bremsstromkreis befindliche Schaltkontakt S1 mit einer ersten Einschaltverzögerungszeit t1ein vom Motor- in den Bremsbetrieb sowie im wesentlichen unverzögert vom Brems- in den Motorbetrieb um. Der im Motorstromkreis befindliche Schaltkontakt S3 schaltet mit einer dritten Einschaltverzögerungszeit t3ein vom Brems- in den Motorbetrieb um. Der weitere im Motorstromkreis befindliche Schalter S2 hingegen schaltet im wesentlichen unverzögert vom Brems- in den Motorbetrieb um. Weiter schalten die beiden im Motorstromkreis befindlichen Schaltkontakte S2, S3 im wesentlichen unverzögert vom Motor- in den Bremsbetrieb um. Beim Umschalten vom Brems- in den Motorbetrieb erfolgt somit ein Sanftanlauf des Elektromotors 1 über den Sanftanlaufwiderstand 28 und erst nach Ablauf der Einschaltverzögerungszeit t3ein liegt dann die volle Versorgungsspannung 5 am Elektromotor 1 an. Beispielsweise kann die erste Einschaltverzögerungszeit t1ein größer als 4 Millisekunden gewählt werden und/oder die dritte Einschaltverzögerungszeit t3ein im Bereich von ungefähr 600 Millisekunden liegen.

Die Erfindung ist nicht auf das beschriebene und dargestellte Ausführungsbeispiel beschränkt. Sie umfaßt vielmehr auch alle fachmännischen Weiterbildungen im Rahmen des Erfindungsgedankens. So kann der erfindungsgemäße Schalter nicht nur an Elektrowerkzeugen eingesetzt werden sondern auch in elektrischen Haushaltsgeräten, elektrischen Gartengeräten o. dgl. Verwendung finden.

### Bezugszeichenliste:

- 1: Elektromotor
- 2: Anker
- 3: Feldwicklung
- 4: Schalter
- 5: Versorgungsspannung
- 5',5'': elektrischer Anschluß
- 6: Bremsmodul
- 7: Gehäuse (von Schalter)
- 8,9: Kontaktsystem
- 10: (weiteres) Kontaktsystem
- 11: Betätigungsorgan
- 12: Feder
- 13: Stößel
- 14: Wippe
- 15: Blattfeder
- 16: Verzögerungsmittel
- 17: Gestänge
- 18: erster Arm
- 19: zweiter Arm
- 20: Kugelkopf
- 21: Aufnahmepfanne
- 22: viskose Flüssigkeit
- 23: Trommel
- 24: Welle
- 25: Kugelgelenk
- 26: Bremswicklung
- 27: Bremswiderstand
- 28: Sanftanlaufwiderstand

## Patentansprüche

1. Schalter mit einem wenigstens eine Feldwicklung (3) und einen Anker (2) besitzenden Elektromotor (1), insbesondere für elektrisch bremsbare Elektrohandwerkzeuge, wie Bohrmaschinen, Winkelschleifer, Kreissägen, Oberfräsen, Heckenscheren o. dgl., mit Schaltkontakten (S1, S2, S3), wobei zwei Schaltkontakte (S1, S2) zwischen einem Motor- und einem Bremsbetrieb des Elektromotors (1) umschalten, wobei im Motorbetrieb ein aus der Feldwicklung (3), dem Schaltkontakt (S1, S2, S3) und dem Anker (2) in Reihe an der Versorgungsspannung (5, 5', 5'') liegender Motorstromkreis gebildet ist, und wobei im Bremsbetrieb ein aus der Feldwicklung (3) und/oder einer Bremswicklung (26), dem Schaltkontakt (S1, S2) und dem Anker (2) bestehender geschlossener Bremsstromkreis gebildet ist, und mit einem Verzögerungsmittel (16), das mit einem der Schaltkontakte (S1) zur Verzögerung der Umschaltbewegung vom Motor- in den Bremsbetrieb mit einer Verzögerungszeit in Wirkverbindung bringbar ist, **dadurch gekennzeichnet, daß** das eine Verzögerungsmittel (16) mit einem der weiteren Schaltkontakte (S2, S3) zur Verzögerung von dessen Umschaltbewegung vom Brems- in den Motorbetrieb und/oder vom Motor- in den Bremsbetrieb mit einer weiteren Verzögerungszeit ebenfalls in Wirkverbindung bringbar ist, und daß die Wirkverbindung für die Schaltkontakte (S1, S2, S3) derart ausgestaltet ist, daß die Verzögerungszeiten für die beiden Schaltkontakte (S1, S2, S3) unterschiedlich sind.

2. Schalter nach Anspruch 1, **dadurch gekennzeichnet, daß** die Umschaltbewegung der Schaltkontakte (S1, S2) sowohl vom Motor- in den Bremsbetrieb als auch umgekehrt vom Brems- in den Motorbetrieb verzögert ist.

3. Schalter nach Anspruch 1 oder 2, **dadurch gekennzeichnet, daß** der im Motorstromkreis zwischen dem Anker (2) und der Feldwicklung (3) befindliche Schaltkontakt (S1) mit einer ersten Einschaltverzögerungszeit (t1ein) vom Brems- in den Motorbetrieb und mit einer ersten Ausschaltverzögerungszeit (t1aus) vom Motor- in den Bremsbetrieb umschaltet, und/oder daß der im Motorstromkreis zwischen dem Anker (2) und der Versorgungsspannung (5') befindliche Schaltkontakt (S2) mit einer zweiten Einschaltverzögerungszeit (t2ein) vom Brems- in den Motorbetrieb und mit einer zweiten Ausschaltverzögerungszeit (t2aus) vom Motor- in den Bremsbetrieb umschaltet.

4. Schalter nach Anspruch 1, 2 oder 3, **dadurch gekennzeichnet, daß** die zweite Einschaltverzögerungszeit (t2ein) größer als die erste Einschaltverzögerungszeit (t1ein) und/oder die zweite Ausschaltverzögerungszeit (t2aus) größer als die erste Ausschaltverzögerungszeit (t1aus) ist, so daß die Differenz (t3ein) zwischen der zweiten und ersten Einschaltverzögerungszeit und/oder die Differenz (t3aus) zwischen der zweiten und ersten Ausschaltverzögerungszeit von Null verschieden ist.

5. Schalter nach einem der Ansprüche 1 bis 4, **dadurch gekennzeichnet, daß** die Verzögerungszeiten (t1ein, t2ein, t1aus, t2aus) wenigstens die Größe der Zeitdauer einer Wechselspannungshalbwelle aufweisen, insbesondere größer als 10 Millisekunden sind.

6. Schalter nach Anspruch 1, **dadurch gekennzeichnet, daß** der im Bremsstromkreis befindliche Schaltkontakt (S1) mit einer ersten Einschaltverzögerungszeit (t1ein) vom Motor- in den Bremsbetrieb sowie im wesentlichen unverzögert vom Bremsin den Motorbetrieb umschaltet, und/oder daß der im Motorstromkreis befindliche Schaltkontakt (S3) mit einer dritten Einschaltverzögerungszeit (t3ein) vom Brems- in den Motorbetrieb umschaltet, während der weitere im Motorstromkreis befindliche Schalter (S2) im wesentlichen unverzögert vom Brems- in den Motorbetrieb umschaltet, sowie daß die beiden im Motorstromkreis befindlichen Schaltkontakte (S2, S3) im wesentlichen unverzögert vom Motor- in den Bremsbetrieb umschalten.

7. Schalter nach Anspruch 6, **dadurch gekennzeichnet, daß** die erste Einschaltverzögerungszeit (t1ein) größer als 4 Millisekunden ist und/oder die dritte Einschaltverzögerungszeit (t3ein) im Bereich von ungefähr 600 Millisekunden liegt.

8. Schalter nach einem der Ansprüche 1 bis 7, **dadurch gekennzeichnet, daß** die Schaltkontakte (S1, S2, S3) in einem Gehäuse (7) aufgenommen sind, daß am Gehäuse (7) ein Betätigungsorgan (11) zur manuellen Umschaltung der Schaltkontakte (S1, S2, S3) angeordnet ist und daß die Schaltkontakte (S1, S2, S3) mit einem Schnappmechanismus in der Art eines Übertotpunktschalters versehen sind, so daß die Umschaltbewegung nach Auslösung durch das Betätigungsorgan (11) vom Betätigungsorgan (11) nicht weiter beeinflußbar ist.

9. Schalter nach einem der Ansprüche 1 bis 8, **dadurch gekennzeichnet, daß** die Mittel zur Herstellung der Wirkverbindung des Schaltkontaktes (S1, S2) mit dem Verzögerungsmittel (16) aus einem Gestänge (17) bestehen, das einerseits am Schaltkontakt (S1, S2) und andererseits am Verzögerungsmittel (16) angelenkt und/oder befestigt ist, daß vorzugsweise das Gestänge (17) aus einem ersten Arm (18) und einem zweiten Arm (19) besteht, die insbesondere mittels eines in eine in der Art eines Langloches ausgebildete Aufnahmepfanne (21) eingreifenden Kugelkopfes (20) miteinander gelenkig verbunden sind, wobei der erste Arm (18) am Schaltkontakt (S1, S2) angelenkt und der zweite Arm (19) am Verzögerungsmittel (16) befestigt ist.

10. Schalter nach einem der Ansprüche 1 bis 9, **dadurch gekennzeichnet, daß** das Verzögerungsmittel (16) im Gehäuse (7) befindlich ist, daß vorzugsweise das Verzögerungsmittel (16) als eine mit einer viskosen Flüssigkeit (22) gefüllte Trommel (23) mit einer darin angeordneten Welle (24) ausgebildet ist, so daß die Trommel (23) und die Welle (24) gedämpft relativ zueinander bewegbar sind, wobei insbesondere die Viskosität der Flüssigkeit (22) in Abhängigkeit von der gewünschten Verzögerungszeit gewählt ist, und daß weiter vorzugsweise der zweite Arm (19) an der Welle (24) befestigt ist, so daß der zweite Arm (19) mit der Welle (24) verzögert bewegbar ist.

11. Schalter nach einem der Ansprüche 1 bis 10, **dadurch gekennzeichnet, daß** der jeweilige zweite Arm (19) des Gestänges (17) für die Schaltkontakte (S1, S2) an jeweils einem Ende der Welle (24) des lediglich einen Verzögerungsmittels (16) befestigt ist, und daß vorzugsweise die Aufnahmepfannen (21) zwischen dem ersten und zweiten Arm (18, 19) des Gestänges (17) eine unterschiedlich Größe zur Einstellung eines unterschiedlichen Leerhubs für die Schaltkontakte (S1, S2) besitzen, so daß mittels des Leerhubes die unterschiedlichen Verzögerungszeiten der Schaltkontakte (S1, S2), insbesondere die Differenz (t3ein, t3aus) zwischen den jeweiligen Verzögerungszeiten, einstellbar sind.

## Claims

1. Switch with an electric motor (1) comprising at least a field winding (3) and an armature (2), in particular for electrically brake able power tools, such as drilling machines, angle grinders, circular saws, recessing and shaping machines, hedge trimmers or the like, with switching contacts (S1, S2, S3), wherein two switching contacts (S1, S2) change over between a motor and a braking operation of the electric motor (1), wherein a motor electric circuit located in series on the supply voltage (5, 5', 5'') is formed during motor operation from the field winding (3), the switching contact (S1, S2, S3) and the armature (2), and wherein a closed braking electric circuit consisting of the field winding (3) and/or a brake winding (26), the switching contact (S1, S2) and the armature (2) is formed during braking operation, and with a delay means (16) which can be brought into active connection with one of the switching contacts (S1) to delay the changeover movement from motor into braking operation with a delay time, **characterised in that** a delay means (16) can also be brought into active connection with one of the further switching contacts (S2, S3) to delay the changeover movement thereof from braking into motor operation and/or from motor into braking operation with a further delay time and **in that** the active connection for the switching contacts (S1, S2, S3) is formed in such a way that the delay times are different for the two switching contacts (S1, S2, S3).

2. Switch according to claim 1, **characterised in that** the changeover movement of the switching contacts (S1, S2) is delayed both from motor into braking operation and vice versa from braking into motor operation.

3. Switch according to claim 1 or 2, **characterised in that** the switching contact (S1) located in the motor electric circuit between the armature (2) and the field winding (3) changes over with a first switch-on delay time (t1 on) from braking into motor operation and with a first switch-off delay time (t1 off) from motor into braking operation, and/or **in that** the switching contact (S2) located in the motor electric circuit between the armature (2) and the delay voltage (5') changes over with a second switch-on delay time (t2 on) from braking into motor operation and with a second switch-off delay time (t2 off) from motor into braking operation.

4. Switch according to claim 1, 2 or 3, **characterised in that** the second switch-on delay time (t2 on) is greater than the first switch-on delay time (t1 on) and/or the second switch-off delay time (t2 off) is greater than the first switch-off delay time (t1 off), so the difference (t3 on) between the second and first switch-on delay time and/or the difference (t3 off) between the second and first switch-off delay time is different from zero.

5. Switch according to any one of claims 1 to 4, **characterised in that** the delay times (T1 on, t2 on, t1 off, t2 off) have at least the size of the time duration of an alternating voltage half-wave, in particular are greater than 10 milliseconds.

6. Switch according to claim 1, **characterised in that** the switching contact (S1) located in the braking electric circuit changes over with a first switch-on delay time (t1 on) from motor into braking operation and substantially undelayed from braking into motor operation and/or **in that** the switching contact (S3) located in the motor electric circuit changes over with a third switch-on delay time (t3 on) from braking into motor operation, while the further switch (S2) located in the motor electric circuit changes over substantially undelayed from braking into motor operation, and **in that** the two switching contacts (S2, S3) located in the motor electric circuit change over substantially undelayed from motor into braking operation.

7. Switch according to claim 6, **characterised in that** the first switch-on delay time (t1 on) is greater than 4 milliseconds and/or the third switch-on delay time (t3 on) is in the range of approximately 600 milliseconds.

8. Switch according to any one of claims 1 to 7, **characterised in that** the switching contacts (S1, S2, S3) are received in a housing (7), **in that** an actuating member (11) for manually changing over the switching contacts (S1, S2, S3) is arranged on the housing (7) and **in that** the switching contacts (S1, S2, S3) are provided with a snap mechanism in the manner of an over dead centre switch, so the changeover movement cannot be further influenced by the actuating member (11) after triggering by the actuating member (11).

9. Switch according to any one of claims 1 to 8, **characterised in that** the means for producing the active connection of the switching contact (S1, S2) to the delay means (16) consist of a linkage (17) which is articulated and/or fastened on the one hand to the switching contact (S1, S2) and on the other hand to the delay means (16), **in that** the linkage (17) preferably consists of a first arm (18) and a second arm (19), which are connected to one another in an articulated manner, in particular by means of a ball head (20) engaging in a receiving socket (21) formed in the manner of a slot, the first arm (18) being articulated to the switching contact (S1, S2) and the second arm (19) being fastened to the delay means (16).

10. Switch according to any one of claims 1 to 9, **characterised in that** the delay means (16) is located in the housing (7), **in that** the delay means (16) is preferably formed as a drum (23) filled with a viscous fluid (22) with a shaft (24) arranged therein, so the drum (23) and the shaft (24) can be moved relative to one another in a damped manner, the viscosity of the fluid (22) in particular being selected as a function of the desired delay time and **in that** the second arm (19) is preferably also fastened to the shaft (24), so the second arm (19) can be moved in a delayed manner with the shaft (24).

11. Switch according to any one of claims 1 to 10, **characterised in that** the respective second arm (19) of the linkage (17) for the switching contacts (S1, S2) is fastened to one respective end of the shaft (24) of the only one delay means (16) and **in that** between the first and second arm (18, 19) of the linkage (17) the receiving sockets (21) preferably have a different size for adjusting a different idle travel for the switching contacts (S1, S2) so the different delay times of the switching contacts (S1, S2), in particular the difference (t3 on, t3 off), between the respective delay times can be adjusted by means of the idle travel.

## Revendications

1. Commutateur, comportant un moteur électrique (1) possédant au moins un enroulement de champ (3) et un induit (2), en particulier pour des outils électriques à main pouvant être freinés électriquement, comme des perceuses, des meuleuses d'angle, des scies circulaires, des défonceuses, des cisailles à haies ou analogues, comportant des contacts de commutation (S1, S2, S3), deux contacts de commutation (S1, S2) commutant entre un fonctionnement moteur et un fonctionnement de freinage du moteur électrique (1), dans le fonctionnement moteur, un circuit moteur constitué de l'enroulement de champ (3), du contact de commutation (S1, S2, S3) et de l'induit (2) en série se trouvant à la tension d'alimentation (5, 5' 5") étant formé et, en fonctionnement de freinage, un circuit de freinage fermé, constitué de l'enroulement de champ (3) et/ou d'un enroulement de freinage (26), du contact de commutation (S1, S2) et de l'induit (2) étant formé, et comportant un moyen de temporisation (16) qui peut être amené en liaison active avec un des contacts de commutation (S1) pour retarder le mouvement de commutation du fonctionnement moteur en le fonctionnement de freinage avec un temps de retard,
**caractérisé en ce qu'**un moyen de temporisation (16) peut être amené de même en liaison active avec un des autres contacts de commutation (S2, S3) pour retarder son mouvement de commutation du fonctionnement de freinage en le fonctionnement moteur et/ou du fonctionnement moteur en le fonctionnement de freinage avec un autre temps de retard, et **en ce que** la liaison active pour les contacts de commutation (S1, S2, S3) est réalisée de sorte que les temps de retard pour les deux contacts de commutation (S1, S2, S3) sont différents.

2. Commutateur selon la revendication 1,
**caractérisé en ce que** le mouvement de commutation des contacts de commutation (S1, S2) est retardé aussi bien du fonctionnement moteur en le fonctionnement de freinage qu'également, inversement, du fonctionnement de freinage en le fonctionnement moteur.

3. Commutateur selon la revendication 1 ou 2,
**caractérisé en ce que** le contact de commutation (S1) se trouvant dans le circuit moteur entre l'induit (2) et l'enroulement de champ (3) commute avec un premier temps de retard de mise en circuit (t1en) du fonctionnement de freinage en le fonctionnement moteur et avec un premier temps de retard de mise hors circuit (t1hors) du fonctionnement moteur en le fonctionnement de freinage, et/ou **en ce que** le contact de commutation (S2) se trouvant dans le circuit moteur entre l'induit (2) et la tension d'alimentation (5') commute avec un second temps de retard de mise en circuit (t2en) du fonctionnement de freinage en le fonctionnement moteur et avec un second temps de retard de mise hors circuit (t2hors) du fonctionnement moteur en le fonctionnement de freinage.

4. Commutateur selon la revendication 1, 2 ou 3,
**caractérisé en ce que** le second temps de retard de mise en circuit (t2en) est plus grand que le premier temps de retard de mise en circuit (t1en) et/ou le second temps de retard de mise hors circuit (t2hors) est plus grand que le premier temps de retard de mise hors circuit (t1hors), de sorte que la différence (t3en) entre les second et premier temps de retard de mise en circuit et/ou la différence (t3hors) entre les second et premier temps de retard de mise hors circuit sont différentes de zéro.

5. Commutateur selon une des revendications 1 à 4,
**caractérisé en ce que** les temps de retard (t1en, t2en, t1hors, t2hors) présentent au moins la valeur de la durée d'une demi-onde de tension alternative, sont en particulier supérieurs à 10 millisecondes.

6. Commutateur selon la revendication 1,
**caractérisé en ce que** le contact de commutation (S1) se trouvant dans le circuit de freinage commute avec un premier temps de retard de mise en circuit (tien) du fonctionnement moteur en le fonctionnement de freinage ainsi que généralement de façon non retardée du fonctionnement de freinage en le fonctionnement moteur, et/ou **en ce que** le contact de commutation (S3) se trouvant dans le circuit moteur commute avec un troisième temps de retard de mise en circuit (t3en) du fonctionnement de freinage en le fonctionnement moteur, tandis que l'autre commutateur (S2) se trouvant dans le circuit moteur commute généralement de façon non retardée du fonctionnement de freinage en le fonctionnement moteur, et **en ce que** les deux contacts de commutation (S2, S3) se trouvant dans le circuit moteur commutent généralement de façon non retardée du fonctionnement moteur en le fonctionnement de freinage.

7. Commutateur selon la revendication 6,
**caractérisé en ce que** le premier temps de retard de mise en circuit (tien) est supérieur à 4 millisecondes et/ou le troisième temps de retard de mise en circuit (t3en) se trouve dans la zone d'environ 600 millisecondes.

8. Commutateur selon une des revendications 1 à 7,
**caractérisé en ce que** les contacts de commutation (S1, S2, S3) sont reçus dans un boîtier (7), **en ce que**, sur le boîtier (7), il est agencé un organe d'actionnement (11) pour la commutation manuelle des contacts de commutation (S1, S2, S3), et **en ce que** les contacts de commutation (S1, S2, S3) sont munis d'un mécanisme à enclenchement à la manière d'un commutateur à point mort haut, de sorte que le déplacement de commutation après déclenchement par l'organe d'actionnement (11) ne peut pas être encore influencé par l'organe d'actionnement (11).

9. Commutateur selon une des revendications 1 à 8,
**caractérisé en ce que** les moyens pour réaliser la liaison active du contact de commutation (S1, S2) avec le moyen de temporisation (16) sont constitués d'une tringlerie (17), qui, d'une part, est articulée et/ou fixée au contact de commutation (S1, S2) et, d'autre part, au moyen de temporisation (16), **en ce que**, avantageusement, la tringlerie (17) est constituée d'un premier bras (18) et d'un second bras (19), qui sont reliés ensemble de façon articulée en particulier au moyen d'une tête sphérique (20) s'engageant dans une poche de réception (21) réalisée à la manière d'un trou oblong, le premier bras (18) étant articulé au contact de commutation (S1, S2) et le second bras (19) étant fixé au moyen de temporisation (16).

10. Commutateur selon une des revendications 1 à 9,
**caractérisé en ce que** le moyen de temporisation (16) se trouve dans le boîtier (7), **en ce que**, avantageusement, le moyen de temporisation (16) est réalisé comme un tambour (23), rempli d'un liquide visqueux (22), ayant un arbre (24) agencé dans celui-ci, de sorte que le tambour (23) et l'arbre (24) peuvent être déplacés l'un par rapport à l'autre de façon amortie, en particulier la viscosité du liquide (22) étant choisie de façon dépendant du temps de retard souhaité, et **en ce que**, encore avantageusement, le second bras (19) est fixé à l'arbre (24) de sorte que le second bras (19) peut être déplacé de façon retardée avec l'arbre (24).

11. Commutateur selon une des revendications 1 à 10,
**caractérisé en ce que** le second bras respectif (19) de la tringlerie (17) pour les contacts de commutation (S1, S2) est fixé, à chaque fois, à une extrémité de l'arbre (24) d'uniquement un moyen de temporisation (16), et **en ce que**, avantageusement, les poches de réception (21) entre les premier et second bras (18, 19) de la tringlerie (17) possèdent une taille différente pour le réglage d'une course à vide différente pour les contacts de commutation (S1, S2), de sorte que, grâce à la course à vide, les temps de retard différents des contacts de commutation (S1, S2), en particulier la différence (t3en, t3hors) entre les temps de retard respectifs, peuvent être réglés.
